# EUROPÄISCHE PATENTSCHRIFT

(11) **EP 1 334 868 B1**
(45) Veröffentlichungstag und Bekanntmachung des Hinweises auf die Patenterteilung: **26.09.2007**
(21) Anmeldenummer: 03001066.4
(22) Anmeldetag: 18.01.2003
(51) Int. Cl.: B60P 1/44

(54) **Hubladebühnenvorrichtung, insbesondere für Fahrzeuge**
Tailgate lift device, in particular for a vehicle
Hayon élévateur, en particulier pour véhicules

(30) Priorität: 12.02.2002 DE 10205669
(43) Veröffentlichungstag der Anmeldung: 13.08.2003
(73) Patentinhaber: DAUTEL GMBH, D-74211 Leingarten (DE)
(72) Erfinder: Schmid, Stefan, 74078 Heilbronn (DE)
(74) Vertreter: Clemens, Gerhard

(56) Entgegenhaltungen:
- EP-A- 0 980 786
- EP-A- 1 106 431
- EP-A- 1 221 399

## Beschreibung

### TECHNISCHES GEBIET

Die vorliegende Erfindung betrifft eine Hubladebühnenvorrichtung zum Be- und Entladen von Ladegut, die an eine Tragkonstruktion, insbesondere eines Fahrzeuges mit Ladefläche, anschließbar ist, mit einer Ladeplattform, einem zwischen der Ladeplattform und der Tragkonstruktion angeordneten ersten und zweiten Gelenkmechanismus, wobei der erste Gelenkmechanismus einen ersten Hubarm und einen Neigezylinder zum Neigen der Ladeplattform von der Vertikalen in die Horizontale und umgekehrt aufweist, der zweite Gelenkmechanismus einen zweiten Hubarm und einen Hubzylinder zum Heben und Senken der Ladeplattform aufweist, eine Verbindungseinheit vorhanden ist, die die Bewegung der beiden Gelenkmechanismen beim Heben und Senken der Ladeplattform koppelt.

### STAND DER TECHNIK

Es sind Hubladebühnenvorrichtungen bekannt, bei denen auf beiden Seiten der Plattform Gelenkmechanismen vorhanden sind, auf die jeweils ein Hubzylinder und ein Neigezylinder einwirken. Diese Gelenkmechanismen, Hub- und Neigzylinder sind üblicherweise durch ein Querrohr (Tragrohr) miteinander fest als eine Tragkonstruktion verbunden. Die Neigezylinder sind relativ zur Hubschwinge gesehen nach außen versetzt angeordnet. Da das infolge Last auftretende Moment von der Hubschwinge und dem Neigezylinder aufgenommen werden muss, entsteht ein Biegemoment, das die Durchbiegung der Ladeplattform in der angehobenen Stellung weiter vergrößert. Die Durchbiegung der Ladeplattform sollte jedoch weitestgehend vermieden werden, da viele Lasten auf Rollbehältern transportiert werden und es aufgrund der Durchbiegung der Ladeplattform zu Störungen beim Überfahren des Übergangs zur Ladefläche des Fahrzeuges kommt. Mitunter kann dies zu Stößen führen, die zu einem Umstürzen des Ladegutes führen. Um dem entgegen zu wirken, wird bei den bekannten Hubladebühnenvorrichtungen der Bereich, in dem der Neigezylinder an die Plattform angeschlossen ist, in Querrichtung sehr steif ausgebildet. Dies führt zu erhöhtem Materialaufwand und damit zu einem erhöhten Gewicht.

Es sind weiterhin Hubladebühnenvorrichtungen bekannt, bei denen auf ein Gelenkmechanismus ein Hubzylinder und auf den anderen Gelenkmechanismus ein Neigezylinder einwirkt. Da nur ein Zylinder je Seite vorhanden ist, kommt es zu einer sehr starken Torsionsbeanspruchung der Plattform und in der Querverbindung zwischen den Hubarmen. Um diese Torsionsbeanspruchung aufzufangen, wird bei den bekannten Hubladebühnenvorrichtungen ein doppelter Hubarm verwendet, wobei das Torsionsmoment über einen mit erhöhten Steifigkeitswerten ausgestatteten Unterfahrschutz gewährleistet werden muss.

Bei Hubladebühnenvorrichtungen mit nur einem Hubzylinder auf einer Seite der Ladeplattform kommt es vor, dass nach dem Anheben der Plattform unter Last diese zwar auf Seiten des Hubzylinders an der Ladefläche anliegt aber aufgrund der unter Last auftretenden Verformung der Ladeplattform und der exzentrischen Krafteinleitung durch den Hubzylinder im Bereich des Neigezylinders, das heißt auf der anderen Seite der Ladeplattform, ein Spalt zwischen Ladefläche und Ladeplattform entsteht. Dies ist für den praktischen Be- und Entladevorgang sehr ungünstig, da - wie bereits oben erwähnt - es durch den Spalt zu Störungen beim Überfahren des Übergangs mit Rollbehältern kommt, wodurch ein einfacher und sicherer Be- und Entladevorgang stark beeinträchtigt wird und die Gefahr von Unfällen aufgrund umstürzenden Ladegutes ansteigt.

Aus der EP 1 106 431 A1 ist ein Ladebordwandsystem mit einem einseitigen Hub- und Neigezylinder bekannt, bei dem ein Federmittel vorgesehen ist, das zwischen dem zweiten Ende des Tragarms und der Ladebordwand angeordnet ist. Dadurch ist ein "Nachdrücken" des Hubzylinders möglich, um den auftretenden Spalt im Seitenbereich des Neigezylinders zu schließen. Die konstruktive Anordnung eines Federelements im Bereich des gelenkigen Anschlusses des Hubzylinders an die Ladebordwand ist jedoch sehr aufwändig, da in diesem Bereich beengte Platzverhältnisse herrschen.

Aus der EP 0 980 786 A1 ist ein Hubladebühnensystem mit einem einseitig angeordneten Hub- und Neigezylinder bekannt, bei dem die Hubzylindereinrichtung an einem Hubzylinderhebel angeschlossen ist, der um eine Drehachse der beiden Tragwerke schwenkbar gelagert ist. Der Hubzylinderhebel ist dabei im Endbereich des Hubzylinders angeordnet und mit dem Gelenkmechanismus des Neigezylinders über ein Torsionsprofil mittelbar drehfest verbunden. Auch hier ergeben sich konstruktive Probleme, da der Hubzylinderhebel im Anschlussbereich des Hubzylinders an der Ladeplattform angeordnet ist.

In der EP-A-1 221 399 als nachveröffentlichter Stand der Technik gemäß Art. 54(3) EPÜ ist eine Hubladebühnenvorrichtung mit einem ersten Gelenkmechanismus mit Neigezylinder und einem zweiten Gelenkmechanismus mit Hubzylinder beschrieben. Der zweite Gelenkmechanismus besteht aus einem Tragarm und einem parallel beabstandet zu dem Tragarm verlaufenden Parallelarm. Der Parallelarm ist über ein sphärisches Kreuzgelenk, an dem der Hubzylinder eingreift mit dem Tragarm gelenkig verbunden. An dem Parallelarm ist ein Biege- und Torsionsprofil angeschlossen, das die Hubbewegung des zweiten Gelenkmechanismus auf den ersten Gelenkmechanismus überträgt. Zwischen dem Tragarm und dem Torsions- und Biegeprofil ist eine elastische Einheit angeordnet. Unter Belastung eilt der Tragarm des ersten Gelenkmechanismus beim Heben gegenüber dem Tragarm des zweiten Gelenkmechanismus aufgrund der Einwirkung der elastischen Einheit voraus. Daher schlägt der erste Gelenkmechanismus zuerst am Heckschweller an. Die restliche Hubzylinderkraft verformt anschließend das Torsions- und Biegeprofil und den Tragarm des ersten Gelenkmechanismus so weit, dass auch dieser Tragarm an dem Heckschweller anschlägt. Der unter Belastung beim Anschlagen an den Heckschweller zunächst entstehende Spalt auf Seiten des ersten Gelenkmechanismus wird somit durch die anschließende elastische Verformung des Torsions- und Biegeprofil und des Tragarms des ersten Gelenkmechanismus geschlossen.

### DARSTELLUNG DER ERFINDUNG

Ausgehend von dem genannten Stand der Technik liegt der vorliegenden Erfindung die Aufgabe beziehungsweise das technische Problem zugrunde, eine Hubladebühnenvorrichtung der eingangs genannten Art anzugeben, die die im Stand der Technik genannten Nachteile vermeidet, wirtschaftlich hergestellt werden kann, ein geringes Gewicht aufweist, eine konstruktiv besonders einfache Lösung bietet, um ein Nachdrücken des Hubzylinders zum Schließen eines eventuell im Bereich des Neigezylinders auftretenden Spaltes zwischen der Ladeplattform und der Ladefläche dauerhaft und zuverlässig zu gewährleisten. Dabei sollen Bauteile zum Einsatz kommen, die einfach hergestellt und montiert werden können und keinen erhöhten Wartungsaufwand mit sich bringen.

Die erfindungsgemäße Hubladebühnenvorrichtung ist durch die Vorteile des unabhängigen Anspruchs 1 gegeben. Vorteilhafte Ausgestaltungen und Weiterbildungen sind Gegenstand der abhängigen Ansprüche.

Die erfindungsgemäße Hubladebühnenvorrichtung zeichnet sich demgemäß dadurch aus, dass der zweite Hubarm und der Hubzylinder in einer Ebene angeordnet sind, an den zweiten Hubarm eine Ausgleichseinheit gelenkig angeschlossen ist und der Drehpunkt der Ausgleichseinheit nicht im Bereich des Hubarmdrehpunktes liegt, der Hubzylinder gelenkig an die Ausgleichseinheit angeschlossen ist, die Verbindungseinheit an die Ausgleichseinheit angeschlossen ist und zwischen Ausgleichseinheit und zweitem Hubarm eine elastische Einheit angeordnet ist, derart, dass nach Anheben der Ladeplattform bis auf Höhe der Ladefläche durch weiteres Beaufschlagen des Hubzylinders eine weitere Bewegung der Ausgleichseinheit entgegen der Wirkung der elastischen Einheit möglich ist und diese Bewegung über die Verbindungseinheit auf den ersten Gelenkmechanismus übertragen wird, so dass der zwischen der Ladefläche und der Ladeplattform in dem Seitenbereich des ersten Gelenkmechanismus entstandende Spalt geschlossen wird.

Durch das Vorsehen einer gelenkig an den zweiten Hubarm angeschlossenen Ausgleichseinheit, an die der Hubzylinder gelenkig angeschlossen ist und die über die Verbindungseinheit mit dem ersten Gelenkmechanismus gekoppelt ist, ist eine konstruktiv besonders einfache Lösung aufgezeigt, da im Bereich des Anschlusses der Ausgleichseinheit an den zweiten Gelenkmechanismus keine konstruktiv beengten Raumverhältnisse gegeben sind. Die konstruktiv einfachen Gelenkanschlüsse gewährleisten gleichzeitig eine dauerhaft zuverlässige Funktion.

Eine besonders vorteilhafte Ausgestaltung, die konstruktiv besonders einfach ist und die die auf den zweiten Gelenkmechanismus beim Heben und Senken auftretenden Belastungen zuverlässig in diesen einleitet, zeichnet sich dadurch aus, dass die Ausgleichseinheit als zumindest eine, insbesondere zwei auf beiden Seiten des zweiten Hubarms angeordnete, Platteneinheit/en ausgebildet ist/sind.

Eine bevorzugte Ausgestaltung ist dadurch gekennzeichnet, dass die Verbindungseinrichtung an einer an dem ersten Hubarm angeschlossenen Krageinheit angeschlossen ist, derart, dass sie im Wesentlichen immer horizontal angeordnet ist. Durch das Vorsehen einer Krageinheit am ersten Hubarm ist es problemlos möglich, die Verbindungseinheit horizontal auszurichten, so dass sie gleichzeitig als Unterfahrschutz dienen kann.

Um eine sichere Übertragung der Bewegung des zweiten Gelenkmechanismus auf den ersten Gelenkmechanismus zu gewährleisten, zeichnet sich eine besonders vorteilhafte alternative Ausgestaltung dadurch aus, dass die Verbindungseinheit als Hohlprofil, insbesondere Rohrprofil, ausgebildet ist.

Eine konstruktiv besonders einfache Variante, die eine dauerhaft zuverlässige Funktion gewährleistet, zeichnet sich dadurch aus, dass die elastische Einheit als Federeinheit, beispielsweise Blattfedereinheit oder Tellerfedereinheit oder Schraubenfedereinheit, ausgebildet ist.

In einer vorteilhaften alternativen Ausgestaltung kann die elastische Einheit auch aus Gummi bestehen, wobei bevorzugt der Gummi mit Verstärkungselementen versehen ist, um eine dauerhaft zuverlässige Funktion zu gewährleisten.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte Perspektivdarstellung einer Hubladebühnenvorrichtung mit einem ersten Gelenkmechanismus mit Neigezylinder, einem zweiten Gelenkmechanismus mit Hubzylinder, einer Verbindungseinheit zwischen beiden Gelenkmechanismen und einer Ausgleichseinheit mit Federeinheit innerhalb des zweiten Gelenkmechanismus,
- Fig. 2a bis c: schematisierte Detailseitenansicht der Hubladebühnenvorrichtung gemäß Fig. 1 im Bereich des Hubzylinders in verschiedenen Positionen beim Heben und Senken der Ladeplattform,
- Fig. 3a bis c: schematisierte Detailseitenansicht der Hubladebühnenvorrichtung gemäß Fig. 1 im Bereich des Neigezylinders in verschiedenen Positionen beim Heben und Senken der Ladeplattform und
- Fig. 4: schematische Ansicht der Konstruktion gemäß den Figuren 2a beziehungsweise 3a entgegen der Fahrtrichtung, ohne Darstellung der Ladeplattform.

### WEGE ZUM AUSFÜHREN DER ERFINDUNG

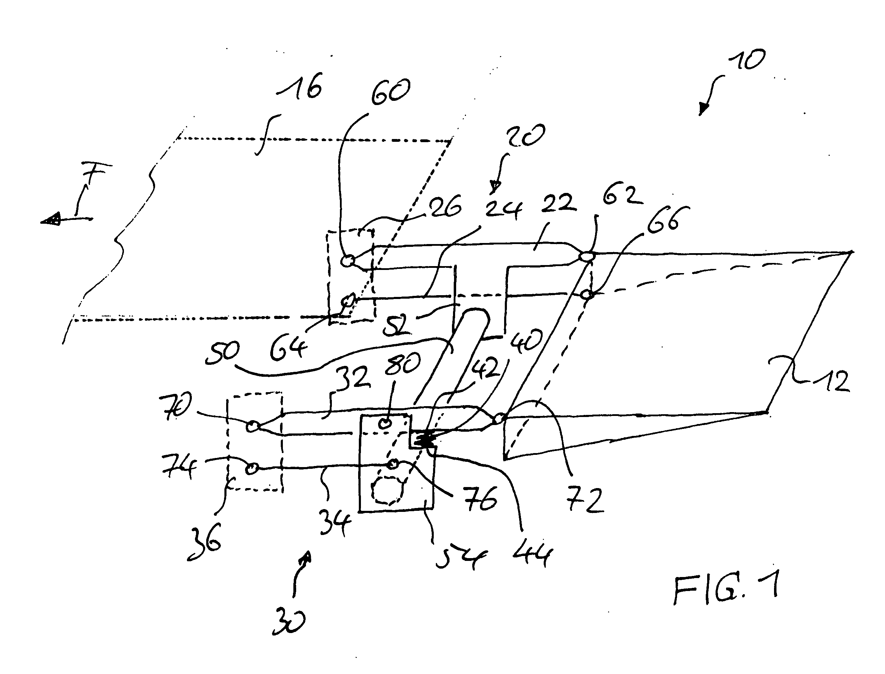

In Fig. 1 ist schematisch in einer Perspektive stark vereinfacht der Aufbau einer Hubladebühnenvorrichtung 10 mit einer Ladeplattform 12 dargestellt, wobei die Ladeplattform 12 dazu dient, Ladegut von einer Ladefläche 16, die in Fig. 1 gestrichelt dargestellt ist, zu be- beziehungsweise zu entladen. Die Hubladebühnenvorrichtung 10 wird bevorzugt bei Lastkraftwagen eingesetzt. Der Anschluss der Ladeplattform 12 an das Chassis des Fahrzeuges erfolgt über einen in Fig. 1 auf der dem Betrachter abgewandten Seite angeordneten ersten Gelenkmechanismus 20 und einem im in Fig. 1 dem Betrachter zugewandten Bereich angeordneten zweiten Gelenkmechanismus 30, die auf beiden Seiten an die Ladeplattform 12 angeschlossen sind. Beide Gelenkmechanismen 20, 30 sind über eine erste Anschlusseinrichtung 26 und eine zweite Anschlusseinrichtung 36 an das Chassis des Fahrzeuges in nicht näher dargestellter, bekannter Art und Weise angeschlossen. Die Fahrtrichtung ist mit Pfeil F angegeben.

Der erste Gelenkmechanismus 20 weist oberseitig einen ersten Hubarm 22 auf, der jeweils in seinem Endbereich über ein erstes Gelenk 60 an die erste Anschlusseinrichtung 26 und über ein zweites Gelenk 62 an die Ladeplattform 12 angeschlossen ist.

Parallel zum ersten Hubarm 22 ist unterhalb desselben ein Neigezylinder 24 über ein drittes Gelenk 64 an die erste Anschlusseinrichtung 26 und über ein viertes Gelenk 66 an die Ladeplattform 12 gelenkig angeschlossen. Der Neigezylinder 24 bildet mit dem ersten Hubarm 22 einen in sich kinematischen Viereckgelenkmechanismus, wodurch durch die Ein- und Ausfahrbewegung des Neigezylinders 24 die Ladeplattform 12 von einer vertikalen in eine horizontale Position und umgekehrt geschwenkt werden kann.

Auf der dem Betrachter von Fig. 1 zugewandten Seite weist der zweite Gelenkmechanismus 30 in gleicher Höhe zum ersten Hubarm 22 des ersten Gelenkmechanismus 20 einen zweiten Hubarm 32 auf, der jeweils in seinem Endbereich über ein fünftes Gelenk 70 gelenkig an die zweite Anschlusseinheit 36 und über ein sechstes Gelenk 72 gelenkig an die Ladeplattform 12 angeschlossen ist.

Parallel unterhalb des zweiten Hubarms 32 ist der Hubzylinder 34 angeordnet, der einerseits über ein siebtes Gelenk 74 an die zweite Anschlusseinheit 36 und andererseits über ein achtes Gelenk 76 gelenkig an eine Ausgleichseinheit 54 angeschlossen ist, die in Fig. 1 schematisch als Platteneinheit dargestellt ist. Die Platteneinheit 54 ist wiederum selbst in etwa in der Mitte des zweiten Hubarms 32 an diesen über ein neuntes Gelenk 80 an diesen angeschlossen.

Zwischen dem zweiten Hubarm 32 und der Ausgleichseinheit 54 ist eine elastische Einheit 40 vorhanden, die als Federeinheit ausgebildet ist und oberseitig an einem ersten Anschlag 42 des zweiten Hubarms 32 und unterseitig an einem zweiten Anschlag 44 der Ausgleichseinheit 54 anliegt. Die Steifigkeit des zwischen der Ausgleichseinheit 54 und dem zweiten Hubarm 32 angeordneten Federelements 40 ist dabei so hoch bemessen, dass beim normalen Heben und Senken kein spürbarer Einfluss auf die Bewegung der Ladeplattform 12 feststellbar ist.

Der erste Hubarm 22 weist in seinem mittleren Bereich eine nach unten weisende Krageinheit 52 auf, die in Fig. 1 schematisch als Platteneinheit dargestellt ist. Die Krageinheit 52 und die Ausgleichseinheit 54 sind über eine torsionssteife Verbindungseinheit 50 miteinander verbunden, wobei die Verbindungseinheit 50 im Ausführungsbeispiel als Rundrohrprofil ausgebildet ist und die Geometrie der Krageinheit 52 und der Ausgleichseinheit 54 so gewählt ist, dass ein Anschluss in horizontaler Lage der Verbindungseinheit 50 an die Krageinheit 52 und die Ausgleichseinheit 54 möglich ist.

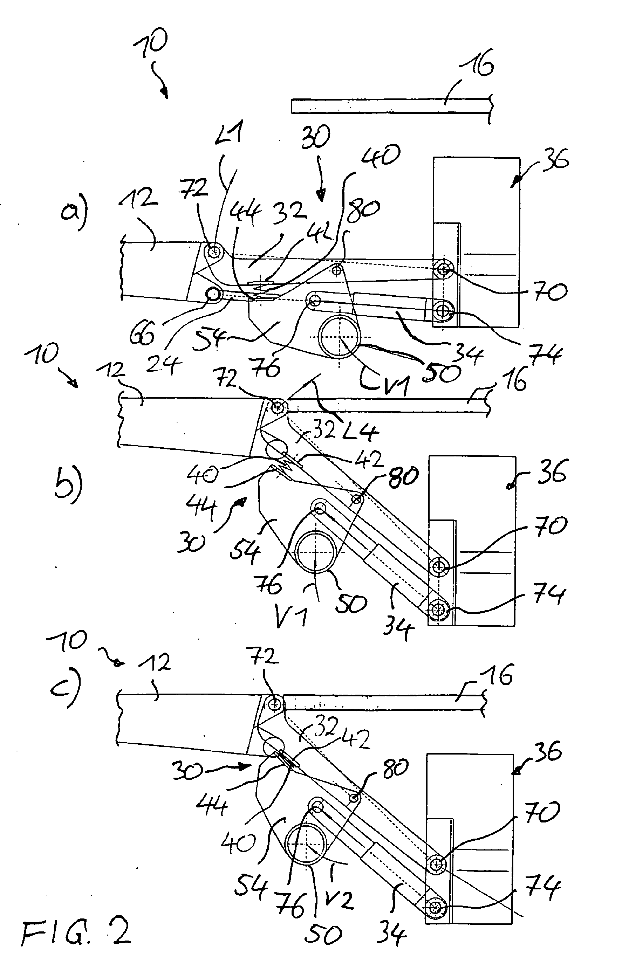

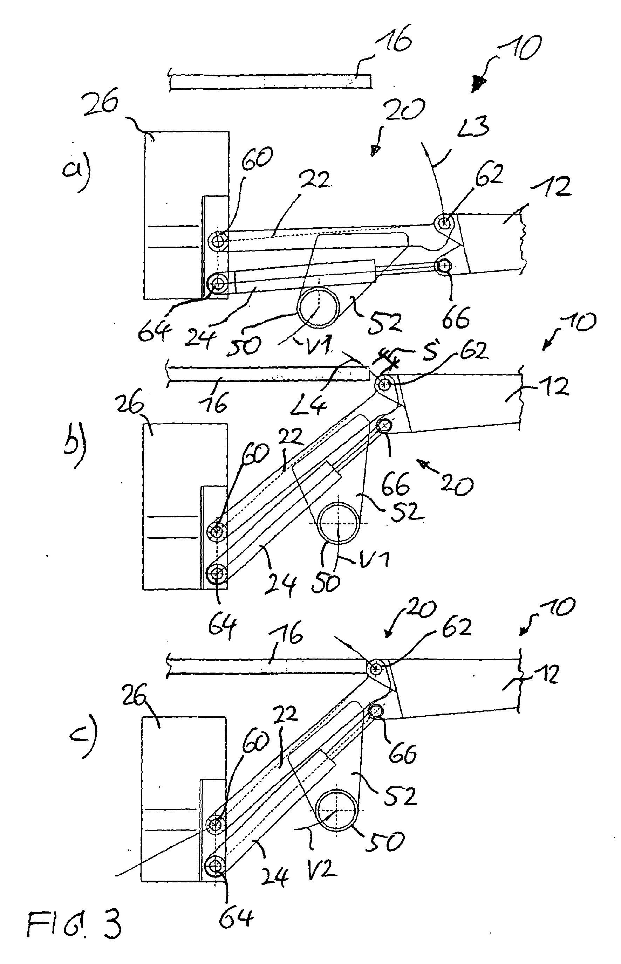

In Fig. 2a ist schematisch der Zustand im Seitenbereich des zweiten Gelenkmechanismus 30 während der Hubbewegung dargestellt. Aufgrund der Druckbeaufschlagung des Hubzylinders 34 beim Heben bewegt sich die Ladeplattform 12 in Pfeilrichtung L1 und damit auch die Verbindungseinheit 50 in Pfeilrichtung V1. Aufgrund der Kopplung des zweiten Gelenkmechanismus 30 über die Verbindungseinheit 50 mit dem ersten Gelenkmechanismus 20 überträgt sich diese Bewegung beim Anheben der Ladeplattform 12 auch auf die Seite des ersten Gelenkmechanismus 20 mit dem Neigezylinder 24 (Pfeile L3 und V3 gemäß Fig. 3a).

Befindet sich die Ladeplattform 12 auf Seiten des Hubzylinders 34 in Anschlagposition (Fig. 2b), so ist es aufgrund der Exzentrizität der auf die Ladeplattform 12 einwirkenden Last zum krafteinleitenden Hubzylinder 34 infolge der elastischen Nachgiebigkeit der Ladeplattform 12 so, dass sich zwischen der Ladefläche 16 und der Ladeplattform 12 in dem Seitenbereich des ersten Gelenkmechanismus 20 ein Spalt S einstellt.

Um den Spalt S gemäß Fig. 3b zu schließen, wird nun gemäß Fig. 2b der Hubzylinder 34 weiterhin mit Druck beaufschlagt. Dadurch bewegt sich die Ausgleichseinheit 54 infolge der elastischen Nachgiebigkeit der Federeinheit 40 um ihren Drehpunkt 80 in Pfeilrichtung V2 weiter, wobei diese Bewegung über die Verbindungseinheit 50 auf den ersten Gelenkmechanismus 20 übertragen wird und sich dadurch die Ladeplattform 12 in Pfeilrichtung L4 weiter nach oben bewegt, wodurch der Spalt S geschlossen wird. Dieser Zustand ist in Fig. 3c auf Seiten des ersten Gelenkmechanismus 20 dargestellt.

Durch das Anordnen einer Federeinheit 40 auf Seiten des zweiten Gelenkmechanismus 30 ist somit in einfacher Art und Weise ein "Nachdrücken" des Hubzylinders 34 möglich, wodurch der infolge Belastung der Ladeplattform 12 entstehende Spalt S zwischen der Ladefläche 16 und Ladeplattform 12 problemlos geschlossen werden kann.

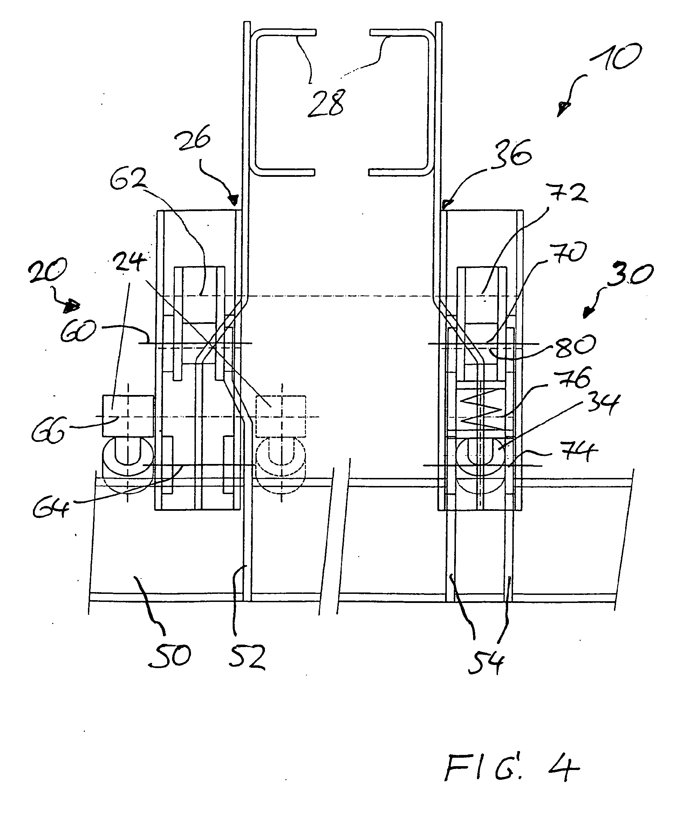

In Fig. 4 ist in einer Ansicht entgegen der Fahrtrichtung F die Positionierung der einzelnen Bauteile der Hubladebühnenvorrichtung 10 gemäß dem Zustand von Fig. 2a beziehungsweises 3a stark schematisiert dargestellt, und zwar ohne Darstellung der Ladeplattform 12. Dabei ist zu erkennen, dass der Hubzylinder 34 zentrisch innerhalb des zweiten Gelenkmechanismus 30 angeordnet ist. Der Neigezylinder 24 kann entweder wie in Fig. 4 dargestellt linksseitig exzentrisch zum ersten Gelenkmechanismus 20 oder exzentrisch nach rechts versetzt zum ersten Gelenkmechanismus 20 (gestrichelte Darstellung gemäß Fig. 4) vorhanden sein.

Die oben beschriebenen Gelenkpunkte sind in Fig. 4 als Achsen dargestellt. In dem Ausführungsbeispiel gemäß Fig. 4 ist zu erkennen, dass die Gelenkpunkte 62 und 72, 60 und 70, 66 und 76 und 64 und 74 jeweils in gleicher Höhe angeordnet sind.

Die erste Anschlusseinrichtung 26 und die zweite Anschlusseinrichtung 36 sind jeweils an das Chassis eines Fahrzeuges angeschlossen, wobei wie in Fig. 4 dargestellt als Bestandteil des Chassis C-Träger 28 vorhanden sind, an die die Anschlusseinrichtungen 26, 36 über in Fig. 4 nicht näher dargestellte Verbindungsmittel stegseitig angeschlossen sind.

## Patentansprüche

1. Hubladebühnenvorrichtung (10) zum Be- und Entladen von Ladegut, die an eine Tragkonstruktion (14), insbesondere eines Fahrzeuges mit Ladefläche, anschließbar ist, mit
- einer Ladeplattform (12),
- einem zwischen der Ladeplattform (12) und der Tragkonstruktion (14) angeordneten ersten und zweiten Gelenkmechanismus (20; 30), wobei
- der erste Gelenkmechanismus (20) einen ersten Hubarm (22) und einen Neigezylinder (24) zum Neigen der Ladeplattform (12) von der Vertikalen in die Horizontale und umgekehrt aufweist,
- der zweite Gelenkmechanismus (30) einen zweiten Hubarm (32) und einen Hubzylinder (34) zum Heben und Senken der Ladeplattform (12) aufweist,
- eine Verbindungseinheit (50) vorhanden ist, die die Bewegung der beiden Gelenkmechanismen (20; 30) koppelt,
**dadurch gekennzeichnet, dass**
- der zweite Hubarm (32) und der Hubzylinder (34) in einer Ebene angeordnet sind, die um 90° zur Ebene der Ladeplattfom gedreht ist,
- an den zweiten Hubarm (32) eine Ausgleichseinheit (54) gelenkig angeschlossen ist und der Drehpunkt der Ausgleichseinheit nicht im Bereich des Hubarmdrehpunktes liegt,
- der Hubzylinder (34) gelenkig an die Ausgleichseinheit (54) angeschlossen ist,
- die Verbindungseinheit (50) an die Ausgleichseinheit (54) angeschlossen ist und
- zwischen Ausgleichseinheit (54) und zweitem Hubarm (32) eine elastische Einheit (40) angeordnet ist, derart, dass
- nach Anheben der Ladeplattform (12) bis auf Höhe der Ladefläche (16) durch weiteres Beaufschlagen des zweiten Hubzylinders (34) eine weitere Bewegung der Ausgleichseinheit (54) entgegen der Wirkung der elastischen Einheit (40) möglich ist und diese Bewegung über die Verbindungseinheit (50) auf den ersten Gelenkmechanismus (20) übertragen wird, so dass der zwischen der Ladefläche (16) und der Ladeplattform (12) in dem Seitenbereich des ersten Gelenkmechanismus entstandene Spalt (S) geschlossen wird.

2. Hubeladebühnenvorrichtung nach Anspruch 1,
**dadurch gekennzeichnet, dass**
- die Ausgleichseinheit (54) als zumindest eine, insbesondere zwei auf beiden Seiten des zweiten Hubarms (32) angeordnete, Platteneinheit/en ausgebildet ist/sind.

3. Hubladebühnenvorrichtung nach Anspruch 1 oder 2,
**dadurch gekennzeichnet, dass**
- die Verbindungseinheit(50) an einer an dem ersten Hubarm (24) angeschlossenen Krageinheit (52) angeschlossen ist, derart, dass sie im Wesentlichen immer horizontal angeordnet ist.

4. Hubladebühnenvorrichtung nach einem oder mehreren der vorstehenden Ansprüche,
**dadurch gekennzeichnet, dass**
- die Verbindungseinheit (50) als Hohlprofil ausgebildet ist.

5. Hubladebühnenvorrichtung nach einem oder mehreren der vorstehenden Ansprüche,
**dadurch gekennzeichnet, dass**
- die elastische Einheit als Federeinheit (40) ausgebildet ist.

6. Hubladebühnenvorrichtung nach Anspruch 5,
**dadurch gekennzeichnet, dass**
- die Federeinheit als Blattfedereinheit ausgebildet ist.

7. Hubladebühnenvorrichtung nach Anspruch 5,
**dadurch gekennzeichnet, dass**
- die Federeinheit (40) als Schraubenfeder ausgebildet ist.

8. Hubladebühnenvorrichtung nach Anspruch 5,
**dadurch gekennzeichnet, dass**
- die Federeinheit als Tellerfeder ausgebildet ist.

9. Hubladebühnenvorrichtung nach einem oder mehreren der Ansprüche 1 bis 4,
**dadurch gekennzeichnet, dass**
- die elastische Einheit aus Gummi besteht.

10. Hubladebühnenvorrichtung nach Anspruch 9,
**dadurch gekennzeichnet, dass**
- die elastische Einheit Verstärkungselemente aufweist.

11. Hubladebühnenvorrichtung nach einem oder mehreren der vorstehenden Ansprüche,
**dadurch gekennzeichnet, dass**
- die Verbindungseinheit (50) als Unterfahrschutz ausgebildet ist.

## Claims

1. Tailgate lifting device (10) for loading and unloading freight, which tailgate lifting device (10) can be attached to a support structure (14), in particular of a vehicle having a loading surface, having
- a loading platform (12)
- a first and second linkage mechanism (20; 30) arranged between the loading platform (12) and the support structure (14), wherein
- the first linkage mechanism (20) has a first lifting arm (22) and a tilt cylinder (24) for tilting the loading platform (12) from the vertical into the horizontal and *vice versa,*
- the second linkage mechanism (30) has a second lifting arm (32) and a lifting cylinder (34) for lifting and lowering the loading platform (12),
- a connecting unit (50) is provided which couples the movement of the two linkage mechanisms (20; 30),
**characterized in that**
- the second lifting arm (32) and the lifting cylinder (34) are arranged in a plane which is rotated 90° with respect to the plane of the loading platform,
- a compensating unit (54) is articulatedly connected to the second lifting arm (32), and the centre of rotation of the compensating unit does not lie in the region of the lifting arm centre of rotation,
- the lifting cylinder (34) is articulatedly connected to the compensating unit (54),
- the connecting unit (50) is connected to the compensating unit (54), and
- an elastic unit (40) is arranged between the compensating unit (54) and the second lifting arm (32), in such a way that
- after the loading platform (12) is lifted to the level of the loading surface (16), by means of further charging of the second lifting cylinder (34), a further movement of the compensating unit (54) counter to the action of the elastic unit (40) is possible, and said movement is transmitted by means of the connecting unit (50) to the first linkage mechanism (20), so that the gap (S) generated between the loading surface (16) and the loading platform (12) in the side region of the first linkage mechanism is closed.

2. Tailgate lifting device according to Claim 1,
**characterized in that**
- the compensating unit (54) is/are embodied as at least one, in particular two plate unit/s arranged on both sides of the second lifting arm (32).

3. Tailgate lifting device according to Claim 1 or 2,
**characterized in that**
- the connecting unit (50) is connected to a cantilever unit (52) which is connected to the first lifting arm (24), in such a way that said connecting unit (50) is substantially always arranged horizontally.

4. Tailgate lifting device according to one or more of the preceding claims,
**characterized in that**
- the connecting unit (50) is embodied as a hollow profile.

5. Tailgate lifting device according to one or more of the preceding claims,
**characterized in that**
- the elastic unit is embodied as a spring unit (40) .

6. Tailgate lifting device according to Claim 5,
**characterized in that**
- the spring unit is embodied as a leaf spring unit.

7. Tailgate lifting device according to Claim 5,
**characterized in that**
- the spring unit (40) is embodied as a coil spring.

8. Tailgate lifting device according to Claim 5,
**characterized in that**
- the spring unit is embodied as a plate spring.

9. Tailgate lifting device according to one or more of the preceding Claims 1 to 4,
**characterized in that**
- the elastic unit is composed of rubber.

10. Tailgate lifting device according to Claim 9,
**characterized in that**
- the elastic unit has reinforcement elements.

11. Tailgate lifting device according to one or more of the preceding claims,
**characterized in that**
- the connecting unit (50) is embodied as an underride protector.

## Revendications

1. Hayon élévateur (10) pour le chargement et le déchargement de fret, qui peut être rattaché à une structure de support (14) équipant notamment un véhicule présentant une surface de chargement, et comprend
- une plate-forme de chargement (12),
- des premier et second mécanismes d'articulation (20 ; 30), interposés entre ladite plate-forme de chargement (12) et ladite structure de support (14),
- le premier mécanisme d'articulation (20) comportant un premier bras élévateur (22) et un vérin d'inclinaison (24) réalisé pour incliner la plate-forme de chargement (12) de la verticale à l'horizontale, et inversement,
- le second mécanisme d'articulation (30) comportant un second bras élévateur (32) et un vérin de levage (34) conçu pour lever et abaisser la plate-forme de chargement (12),
- qu'il est prévu une unité de liaison (50) couplant le mouvement des deux mécanismes d'articulation (20 ; 30),
**caractérisé par le fait**
- **que** le second bras élévateur (32) et le vérin de levage (34) sont situés dans un plan décalé de 90° vis-à-vis du plan de la plate-forme de chargement,
- **qu'**une unité de compensation (54) est rattachée de manière articulée au second bras élévateur (32), et le centre de rotation de ladite unité de compensation ne se trouve pas dans la région du centre de rotation dudit bras élévateur,
- **que** le vérin de levage (34) est rattaché de manière articulée à l'unité de compensation (54),
- **que** l'unité de liaison (50) est rattachée à l'unité de compensation (54), et
- **qu'**une unité élastique (40) est interposée entre l'unité de compensation (54) et le second bras élévateur (32), de façon telle que,
- à l'issue d'un soulèvement de la plate-forme de chargement (12) jusqu'à la hauteur de la surface de chargement (16), une poursuite du mouvement de l'unité de compensation (54) soit possible en opposition à ou à l'encontre de l'action de l'unité élastique (40), par poursuite de la sollicitation du second vérin de levage (34), et que ce mouvement soit transmis au premier mécanisme d'articulation (20) par l'intermédiaire de l'unité de liaison (50), de manière à fermer ou combler l'interstice (S) auquel il est donné naissance, dans la région latérale dudit premier mécanisme d'articulation, entre la surface de chargement (16) et la plate-forme de chargement (12).

2. Hayon élévateur selon la revendication 1,
**caractérisé par le fait que**
- l'unité de compensation (54) est réalisée sous la forme d'au moins une, en particulier de deux unités à platines ou plaques agencée(s) de part et d'autre du second bras élévateur (32).

3. Hayon élévateur selon la revendication 1 ou 2,
**caractérisé par le fait que**
- l'unité de liaison (50) est rattachée à une unité en porte-à-faux (52) reliée au premier bras élévateur (24), de telle sorte qu'elle soit sensiblement horizontale en permanence.

4. Hayon élévateur selon l'une ou plusieurs des revendications précédentes,
**caractérisé par le fait que**
- l'unité de liaison (50) est réalisée sous la forme d'un profilé creux.

5. Hayon élévateur selon l'une ou plusieurs des revendications précédentes,
**caractérisé par le fait que**
- l'unité élastique est réalisée sous la forme d'une unité à ressort (40).

6. Hayon élévateur selon la revendication 5,
**caractérisé par le fait que**
- l'unité élastique est réalisée sous la forme d'une unité à lame de ressort.

7. Hayon élévateur selon la revendication 5,
**caractérisé par le fait que**
- l'unité élastique (40) est réalisée sous la forme d'un ressort hélicoïdal.

8. Hayon élévateur selon la revendication 5,
**caractérisé par le fait que**
- l'unité élastique est réalisée sous la forme d'une rondelle élastique.

9. Hayon élévateur selon l'une ou plusieurs des revendications 1 à 4,
**caractérisé par le fait que**
- l'unité élastique est réalisée en caoutchouc.

10. Hayon élévateur selon la revendication 9,
**caractérisé par le fait que**
- l'unité élastique présente des éléments de renforcement.

11. Hayon élévateur selon l'une ou plusieurs des revendications précédentes,
**caractérisé par le fait que**
- l'unité de liaison (50) est réalisée sous la forme d'une protection anti-encastrement.
